# EUROPEAN PATENT APPLICATION

(11) **EP 4 197 974 A1**
(43) Date of publication of application: **21.06.2023**
(21) Application number: 21215104.7
(22) Date of filing: 16.12.2021
(51) Int. Cl.: C02F 1/20, C02F 1/00, B01D 19/00, B01D 53/14, B01D 53/58, B01D 3/34, C02F 103/20, C02F 101/16, C02F 1/66

(54) **PROCESS FOR THE EXTRACTION AND RECOVERY OF NITROGEN CONTAINED IN ZOOTECHNICAL WASTEWATER BY A SKIMMING PLANT**

(71) Applicant: Idro Group S.r.l., 20831 Seregno (MB) (IT)
(72) Inventor: Benedetti, Michele, 20831 Seregno (MB) (IT)
(74) Representative: Cammareri, Emanuele

(57) **Abstract**

The present invention relates to a novel process for the recovery of nitrogen contained in zootechnical wastewater by means of a skimming plant comprising a reactor equipped with rotating surfaces for the extraction and recovery of high-yeld nitrogen.

## Description

### TECHNICAL FIELD

The present invention relates to a process for the recovery of nitrogen contained in zootechnical wastewater in particolar by means of a skimming plant.

### STATE OF THE ART

The need to separate and recover nitrogen from zootechnical wastewater derives mainly from the need to minimize the pollution caused by nitrates from agricultural sources. At European level, this need is regulated by the so-called Nitrates Directive (Directive 91/676 / EEC of 12 December 1991) which in Italy has been implemented through some regulations including Legislative Decree 152/2006 "Environmental regulations", Part Three Art. 92 ("Vulnerable areas from nitrates of agricultural origin") and Art. 112 ("Agronomic use of zootechnical wastewater"); the Interministerial Decree n. 5046 of 25 February 2016 n. 5046 "Criteria and general technical standards for the regional discipline of the agronomic use of zootechnical wastewater and waste water, as well as for the production and agronomic use of digestate" and the Ministerial Decree of 19 April 1999 "Code of Good Agricultural Practice".

In the context of the present description and in the subsequent claims, when nitrogen is referred to as being recovered, it is understood to be in the form of ammonia (NH₃) or a quaternary ammonium salt.

These regulations have established some limits on the quantity of nitrogen from livestock farms that can be disposed of for each year and for each hectare of agricultural land (340 kg N/ha - corresponding to 3.4 10⁻² Kg of N/m²), with stricter limits for areas classified as vulnerable (170 Kg N/ha - corresponding to 1.710⁻² Kg of N/m²).

In relation to the limits imposed, a large part of the livestock stables do not have a sufficient land area for the wastewater being disposed of according to legislation, thus having to reduce the amount of nitrogen present in wastewater before the same being spread on the fields or to rent other land to increase the available surface and relocate wastewater.

The problem is made even more topical by the fact that the new rules for the construction of new anaerobic digestion plants for agricultural biomass or for the conversion of existing plants for the production of advanced biomethane instead require use of zootechnical wastewater as the main biomass, which is rich in nitrogen (Interministerial Decree of 2 March 2018). Disposal of the related digestate results in an undesirable increase in the nitrogen load to the soil in perspective.

For the livestock farms involved, the alternatives available today are the rental or purchase of new land to increase the agricultural area available for spreading, with high costs for both rent and transport, or the installation of a denitrification plant for the removal and possible recovery of nitrogen, which allows to maintain a constant agricultural area while respecting the regulations in force.

Among the slurry denitrification technologies, in addition to the reductive technologies, which are mostly biological processes that transform ammonia nitrogen into free nitrogen and partly also into organic nitrogen (proteins and amino acids), the most relevant are the so-called conservative technologies based on which the nitrogen is not removed, but simply displaced or fixed in some stable form, sometimes for the purpose of facilitating the sale of the by-product as an organic nitrogen fertilizer.

Among the conservative technologies, the most relevant are the following:
a) Solid-liquid separation

The process consists in separating the solid fraction of zootechnical wastewater from the liquid one by means of screens, centrifuges (decanters), rotating drums with rollers or helical compression. In this way the nitrogen that remains in the solid fraction can be more easily delocalized or composted for the formation of an organic fertilizer.

It is mostly a process used as a pretreatment in that the process has a low separation yield of the nitrogen recovered in the solid fraction (between 8% and 30% nitrogen) since the nitrogen remains mostly dissolved in the liquid fraction, which must then necessarily be subjected to further treatments.

Furthermore, the disadvantage of these machines is the electricity consumption and that of any additional flocculants, which is particularly high (as in the case of centrifuges).

### b) Membrane filtration

The membrane filtration process consists of subjecting the liquid to high pressure filtration on permeable membranes. This process offers high theoretical separation efficiencies, but in practice it is associated with a long series of disadvantages, the most important of which is frequent fouling with possible clogging of the membranes. This results in frequent interruptions in operation and related costly maintenance interventions.

Added to the above disadvantages are the costs due to high electrical consumption and high installation cost. In fact, membrane filtration also requires a centrifugation pretreatment, because it requires that the slurry to be treated is very "clean".

### c) Evaporation

Evaporation is a very simple process in which the water contained in the wastewater is thermally evaporated, resulting in a concentration of ammonia, but it requires large amounts of heat.

Usually, sulfuric acid is added to the incoming wastewater to prevent the evaporation of ammonia. In this way, nitrogen remains in the concentrate resulting from the process in the form of ammonium sulphate, dissolved in the solid wastewater concentrate. The concentrate constitutes between 6% and 10% of the initial mass of the digestate and contains about 100% of the initial nitrogen, it can be pelletized and sold as solid organic fertilizer.

However, in the absence of a sufficient source of no-cost waste heat the process is not economically viable. d) Nitro-denitro biological process.

The nitro-denitro biological process is a method derived from the treatment of sewage water. It consists of a biological treatment for the removal of nitrogen which takes place in two steps: a first aerated step for the bacterial nitrification of ammonia and a second step in conditions of anoxia (lack of oxygen) for denitrification which converts the nitrates produced by aeration in free nitrogen thanks to the activation of denitrifying bacteria. The two steps of the process can take place in two separate reservoirs, or, at different times, in the same reservoir by cyclically varying the operating steps of the plant.

The process requires high energy consumption for the aeration of the sewage in the first stage, precisely the nitrification of ammonium, due to the poor selectivity of oxygen, which in addition to producing nitrates also reacts with the carbon of the organic solids contained in the sewage. In sewage treatment, whose organic matter content is typically less than 1%, low oxygen selectivity is not a problem, but in the case of zootechnical or digested wastewater, which typically contains at least 6% volatile solids, it involves a significant waste of electrical energy to achieve the desired nitrifying effect.

For the realization of the plant, it is also necessary to have high treatment volumes and, therefore, high overall surfaces that are often incompatible with the areas available to the farms. Moreover, the biological treatment system does not allow the recovery of nitrogen extracted as fertilizer: nitrogen is emitted into the atmosphere as nitrogen gas.

### e) Absorption of the liquid fraction on straw or shavings followed by composting

The absorption process requires the digestate to be spread on a bed and composted by means of turning systems. To compost the liquid fraction of the digestate it is inevitable to add a vegetable structuring agent. Straw is proposed, but the use of straw as a structuring agent is an economic waste, as it would be more useful as a bedding product for stables or for feeding an anaerobic digestion plant. Even the use of wood shavings, wood chips or sawdust implies critical cost and logistical issues due to competition with biomass combustion plants. However, composting requires a concrete yard of substantial dimensions, the use of special machinery for turning over, a considerable consumption of electricity and, in the summer months, also a high consumption of water in order that an adequate level of humidity is maintained.

### f) Stripping

Stripping represents the closest technology to that of the present invention. It consists in percolating the zootechnical effluent (slurry and/or digestate) in plastic-filled contact columns in counterflow to an air current in order that the transfer of ammonia into the air flow takes place. The air is then washed with a solution of sulfuric or phosphoric acid to recover the ammonia, which subsequently needs to be further concentrated. The result of the stripping is therefore a liquid nitrogen fertilizer.

To achieve acceptable contact times at the completion of the process it is necessary to raise the temperature (> 80 °C) and raise the pH (> 10) by adding a basic reactive (usually lime hydrate).

Although this is a relatively valid technology and therefore represents the current reference technology for the separation and recovery of nitrogen, its use is still limited by the low yield (max. 40% at high temperature) and by the functional problems caused by fouling in the percolation columns, requiring periodic and heavy maintenance and replacement of the filling materials. Moreover, this technology is characterized by a high consumption of heat and reactives.

To date, therefore, there is no truly valid denitrification technology for zootechnical wastewater that can be applied to all cases. Generally speaking, conservative processes are the most interesting and technologically promising, and among these, stripping represents the solution with the greatest potential. In fact, stripping allows nitrogen recovery (circular economy), takes up less space than biological plants and has an excellent cost/performance ratio.

The technical problem of the stripping technology applied to zootechnical wastewater is that it has a reduced separation yeld, consumes energy and reactives and, since it is too sensitive to encrustations and clogging, it needs frequent and constant maintenance.

### OBJECT AND SUMMARY OF THE INVENTION

In the light of the above, the problem underlying the present invention is to devise a process for the recovery of nitrogen contained in zootechnical wastewater that is able to overcome the technological drawbacks that until now have limited the use of the stripping process.

From a technical point of view, the main problem is to obtain a high nitrogen recovery yield (greater than 90%). At the same time there is a need to limit encrustations and clogging for the optimal functioning of the process and, thirdly, to limit the use of reactives which would make expensive recovery and disposal procedures necessary.

These and other objects are achieved by means of a system incorporating the characteristics of the attached claims, which form an integral part of the present description.

According to one of its first aspects, the invention therefore relates to a process of extraction of nitrogen from zootechnical wastewater by means of a skimming plant comprising the steps of:
a. subjecting zootechnical wastewater to a separation pre-treatment for the reduction of suspended solids;
b. feeding the liquid resulting from step a. kept at a controlled temperature in a closed reactor in which rotating surfaces are installed;
c. injecting an air current into the reactor which, due to a skimming contact with the rotating surfaces, is enriched, by evaporation, with nitrogen in the form of ammonia; and
d. mineralizing the nitrogen air obtained from step c. in an absorption column with an acid reactive kept in circulation at a controlled pH.

The present invention solves the problems of the prior art by means of a new process for the recovery of nitrogen contained in zootechnical wastewater based on which this recovery is carried out by making particular use of a skimming plant.

In the context of the present invention and in the subsequent claims, by the term "skimming system" it is intended a system configured to circulate a portion of gas in such a way as to lap the surface of a material in the liquid state containing a dissolved gas, causing its progressive evaporation due to the achievement of an equilibrium between the concentration of the gas in the liquid and the concentration in the gas. In particular, the material in the liquid state can be contained in a reactor.

In accordance with a second aspect thereof, the invention relates to a skimming plant configured to implement the nitrogen extraction process from zootechnical wastewater as described above.

The zootechnical effluents that are treated according to the process of the invention are the slurry effluent from the stables of livestock farms or digestate, i.e. coming from the anaerobic digestion of slurry and zootechnical wastewater, or more generally from liquids with high ammoniacal content.

The separation reduction pre-treatment for the reduction of suspended solids defined in step a. referring to the process according to the present invention, may be one of the various separation methods that a person skilled in the art may actuate for performing the task. This can be, for example, a simple screening or a filtration that allows the separation of suspended solids, being in this way obtained a resulting liquid.

The pre-treatment does not require particular refinements of the liquids since the process is able to treat also liquids containing suspended solids, but since the solids often have a higher organic nitrogen content, their removal aids the denitrification yeld ratio of the process.

The liquid resulting from step a. is fed into a reactor maintained at a controlled temperature, consisting of a closed reactor inside of which rotating surfaces are installed.

The temperature at which the process is carried out is below 80°C, and is preferably between 30°C and 60°C, even more preferably between 40°C and 50°C. Advantageously, the temperature is maintained in a controlled manner through a heat exchanger.

The liquid feed into the reactor can be either batch or continuous.

Rotating surfaces are surfaces of one or more high surface plates or discs which, when placed in rotation, immerse their surface in the ammonia-containing effluent and then expose it to the air current.

In a preferred aspect of the invention, the rotating surfaces are made of a plastic material.

The plastic material of the rotating surfaces is suitably chosen from one of the following polymers: PVC, PEAD, PP and ABS.

According to a further preferred aspect, the rotating surfaces are moved at a rotation speed normally between 0.1 and 10 rpm preferably between 0.5 and 1 rpm. The speed of rotation may however, vary depending on the air flow and other parameters characterizing the process.

In a preferred aspect of the invention, rotating discs placed in rotation by a gear motor, are used, i.e., a mechanical assembly comprising a motor, generally an electric motor, and a speed reducer embedded in the motor frame.

In a preferred aspect of the present invention, the rotating discs have a size of up to 2.40 m in diameter. This size is to allow them to be transported without the need for special transportation but is not a limiting aspect of the invention.

The rotating surfaces suitably wetted by the liquid are lapped by the air current and the transfer by evaporation of the ammonia from the liquid to the air is obtained with consequent extraction of the ammonium from the liquid effluent. The contact surface is as large as possible since the liquid is presented as a thin liquid film.

The high surface area of the plates or discs exposed to the air current results in high extraction yeld even without changing the pH and without having to heat to reach high temperatures.

The air/contact surface ratio varies from 0.5 - 10 m³h/ m² of the surface area, preferably 1 to 2 m³h/ m² (which corresponds in the SI system to 1.39 10⁻⁴-30 2.78 10⁻³ m³h/m² preferably 2.78 10-4 m³h/ m² to 5.56 10⁻⁴ m³h/ m²).

Air is fed into the reactor and preferably distributed by air supply or extraction according to an appropriate skimming contact time which may be generally between 1 and 10 minutes.

In a preferred aspect of the process according to the invention, a fan is used to feed air into the reactor.

The system continuously renews the air in contact with the wetted surface with minimal energy consumption. This results in a reduced operating cost where the simplicity of the liquid air contact does not result in clogging problems.

In the last step d. of the process, the ammonium-rich air current is fed into a filler wash column where it is brought into contact with an acid reactive maintained in circulation at a controlled pH.

Preferably, the acid reagent is a solution (e.g., sulfuric acid H₂SO₄ or phosphoric acid H₃PQ₄) or a gas (e.g., CO₂) with the formation of an ammonium salt (e.g., sulfate ((NH₄)₂SO₄), phosphate ((NH₄)₃PO₄) or carbonate ((NH₄)₂CO₃).

The circulating reagent is maintained at a controlled pH using, for example, a dosing station.

The ammonium salt is preferably collected in a collection reservoir.

Partial recirculation of the air exiting the wash column for feeding the lambent reactor is possible.

The different characteristics in the individual configurations can be combined with each other as desired according to the above description, should one make use of the advantages resulting specifically from a particular combination.

### BRIEF DESCRIPTION OF THE DRAWINGS

Further characteristics and advantages of the present invention will best result from the following detailed description of a preferred embodiment thereof, made with reference to the accompanying drawing.

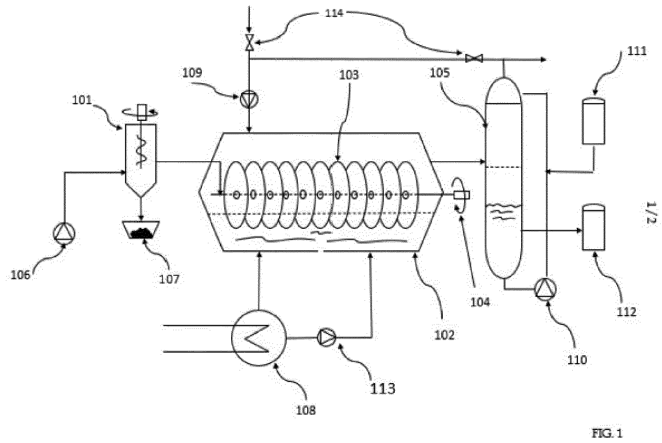

In said drawing, Figure 1 is an embodiment of the system for implementing the process for extracting and recovering nitrogen contained in zootechnical wastewater through a lambing plant according to the present invention.

### DETAILED DESCRIPTION OF THE INVENTION

While the invention is susceptible to various alternative modifications and constructions, a preferred embodiment is shown in the drawing and will be described herein below in detail. It should be understood, however, that there is no intention to limit the invention to the specific form of embodiment shown, but, on the contrary, the invention is intended to cover all modifications, alternative constructions and equivalents that fall within the scope of the invention as defined in the claims.

Use of "for example," "etc.," "or" means non-exclusive alternatives without limitation unless otherwise indicated. The use of "comprises" and "includes" means "comprises or includes, but not limited to" unless otherwise indicated.

Referring to the figure, there is illustrated a preferred embodiment of a process for extracting ammonia from zootechnical wastewater via a lambing plant.

As can be seen from the figure, the process includes a first step a. wherein the zootechnical wastewater is fed from a lifting pit to a separation pre-treatment plant 101 via a pump 106; the suspended solids are collected in a reservoir 107.

Next, in step b., the liquid resulting from step a. is fed, held at a controlled temperature, preferably between 30°C and 60°C, through a heat exchanger 108 and circulation pump 113 thereof, to a reactor 102 comprising a closed reactor in which rotating surfaces 103, preferably rotating discs, are installed which are placed in rotation by a gear motor 104.

Subsequently, a current of air is fed by inlet or extraction into the reactor 102 by means of a fan 109, wherein the air, due to the effect of the skimming contact with the rotating surfaces, is enriched by evaporation of ammonia.

By means of a valve system 114, it is also possible to reuse, as process feed air, a portion of the already treated air exiting the subsequent absorption column 105. Finally, the ammonia-rich air obtained from step c. in an absorption column 105 is mineralized with an acid reagent maintained in circulation by the pump 110 at a controlled pH between 1 and 5. The pH is controlled by means of a dosing station 111, wherein the mineralized product is collected in reservoir 112.

As described above, the most pertinent technical treatment to the present invention is that of stripping. However, the yields of this technology are insufficient. See, for example, Table 1 published by the Centro Ricerche Produzioni Animali - Reggio Emilia (L'Informatore Agrario - 18/2008) in which the characteristics of the liquid wastewater and the reduction of the ammoniacal nitrogen content expressed in mg/kg are reported. As can be seen, with a hydraulic retention time of 5 hours, removal efficiencies were 12% for the test carried out at 50 °C, 29% for the test carried out at 60 °C and 40% for the test carried out at 70 °C.

**Table 1**

| | | Sewage as it is | | Sewage output | | Ammonium nitrogen reduction (%) | |
|---|---|---|---|---|---|---|---|
| T (°C) | Test | pH | Ammonium nitro gen (mg/kg as is) | pH | Ammoniu m nitrogen (mg/kg as is) | Test | Average |
| 50 | 10 | 8,12 | 1410 | 8,84 | 1236 | 12,3 | 12,1 |
| | 20 | 8,28 | 1397 | 8,75 | 1237 | 11,5 | |
| | 30 | 8,00 | 1503 | 8,59 | 1314 | 12,6 | |
| 60 | 10 | 8,33 | 1812 | 8,84 | 1176 | 35,1 | 29,2 |
| | 20 | 7,72 | 1753 | 8,76 | 1262 | 28,0 | |
| | 30 | 8,02 | 1469 | 8,67 | 1110 | 24,4 | |
| 70 | 10 | 8,07 | 1398 | 8,94 | 957 | 31,5 | 39,8 |
| | | | | | | | |
| | 3° | 8,08 | 1465 | 8,61 | 663 | 54,7 | |

The present invention, classifiable in the conservative processes, represents a surprising evolution of the classical stripping plants as it has the following advantages:
First, it makes it possible to extract ammonia from air without having to change the pH of the wastewater. In stripping plants, the limited contact surface available determined by the ratio of air to reservoirs volume or air to filling volume, makes it necessary to speed up the process by correcting the pH or by raising the process temperature.

The skimming process, on the other hand, creates such an high air/wastewater ratio that it is possible to transfer ammonium to the air without having to change the characteristics of the wastewater to be treated. Thus, there is essentially no reactive consumption.

A second advantage concerns the possibility of having high yields at a surprisingly low temperature (<80 °C). In the stripping techniques of the prior art, the contact between the filling materials of the stripping columns and the liquid, the type of reactants injected and the high process temperature (> 80 °C), give rise to encrustations which lead to a rapid decline in terms of yield transfer and which make frequent cleaning and/or replacement operations necessary.

The skimming process operates at the same temperature as the wastewater (max 40 °C - 50 °C) and without dosing of reactive: therefore, there are no problems of fouling and, moreover, the continuous movement of the surfaces and the periodic rotation and immersion in the liquid determine a washing effect that makes the plant insensitive to fouling or clogging.

A third advantage relates to energy consumption. The energy consumption of the stripping systems is determined by the power required for the recirculation of the wastewater in the recycling pumps.

In the process of the invention, air is simply brought into contact with the surfaces with a very low pressure fan, while the rotation of the surfaces or discs is ensured by a gear motor with a low number of revolutions and therefore at a completely reduced power. The power used is therefore almost 5 times lower.

A fourth unquestionable advantage of the process of the invention is the one according to which an air to surface ratio of the wastewater is created which is so high as to make a considerable transfer of ammonium to the air possible. The result is an ammonium separation yield in the range of 80-90%, much higher than that of normal stripping systems.

In order to verify the possibilities of extracting nitrogen from zootechnical wastewater via a skimming process, a great number of laboratory tests were carried out. In particular, an attempt was made to compare the yield of a usual stripping process with that of the process according to the invention.

The invention is illustrated below by way of non-limiting examples, which are not to be construed as limitative to the aim of the invention itself.

### EXAMPLE ACCORDING TO THE INVENTION:

A volume of 20 liters of zootechnical wastewater was pre-treated by a pump with a filtration system. While the suspended solids were recovered and removed, the resulting liquid fed a closed reactor with a 25 cm wide, 30 cm long, 20 cm high reservoir with no. 20 polypropylene discs of 17 cm diameter, with a total area of 0.48 m².

The discs were rotated by a gear motor at a speed of 2 rpm. The reactor was kept at a temperature of 40 °C by means of a heat exchanger.

The air was injected into the reactor with a flow rate of 10 1/min through a fan placed above the reactor.

The ammonia-laden air was then conveyed to an absorption column where the pH was maintained at 5.5 by dosing 50% sulfuric acid.

Results expressed as the average of 4 tests are shown in Table 2.

**Table 2**

| | Pp | Yeld(%) |
|---|---|---|
| | m | |
| N-NH4 Concentration | 2028 | |
| (incoming) | | |
| Average N-NH4 concentration (outgoing) | 160 | |
| Average Yeld | | 92,1 % |

### COMPARATIVE EXAMPLE: Column Stripping

Simultaneously, with the same ammonia liquid and the same temperature and pH characteristics, comparison tests were conducted with a stripping on a classic plastic-filled column with countercurrent flow in order to highlight the different process yields.

The digestate, at a temperature of 40 °C, was fed at the top of a glass column with a diameter of 5 cm with filling rings of the raschig type with a diameter of 5 mm compared to a filling height of 100 cm. The column was fed from below with an air flow rate of 101/min to achieve air/water contact and thus the passage of nitrogen from the digestate to the air (stripping).

The ammonia-laden air was then conveyed to an absorption column. The pH was maintained at 5.5 by 50% sulfuric acid.

Results expressed as an average of 4 tests are shown in Table 3.

**Table 3**

| | Pp | Yield(%) |
|---|---|---|
| | m | |
| -NH4 concentration (incoming) | 2028 | |
| Average N-NH4 concentration (outgoing) | 1480 | |
| Average Yeld | | 27,0 % |

The comparison therefore confirmed the better yield obtainable, under the same conditions, with the lambing plant compared to the stripping plant.

## Claims

1. Process for the extraction of nitrogen from zootechnical wastewater by means of a skimming plant comprising the following steps:
a. subjecting zootechnical wastewater to a separation pre-treatment for the reduction of suspended solids (101);
b. feeding a closed reactor (102), inside of which rotating surfaces (103) are installed, with the liquid resulting from step a., which is kept at a controlled temperature,
c. injecting an air current into the reactor which, due to the skimming contact with the rotating surfaces, is enriched, by evaporation, with nitrogen in the form of ammonia; and
d. mineralizing the nitrogen-rich air obtained from step c. in an absorption column (105) with an acid reagent maintained in circulation at a controlled pH.

2. Process for the extraction of nitrogen from zootechnical wastewater according to claim 1, wherein in step a. the zootechnical wastewater is fed from a lifting pit to the separation pre-treatment plant (101) by means of a pump (106).

3. Process for the extraction of nitrogen according to claim 1 or 2, wherein the removed suspended solids are collected in a reservoir (107).

4. Process for the extraction of nitrogen according to any one of claims 1 to 3, wherein the rotating surfaces (103) are discs rotated by a gear motor (104).

5. Process for the extraction of ammonia according to any one of the preceding claims, wherein the liquid resulting from step a., contained in the reactor (102), is maintained at a temperature between 30°C and 60°C, preferably through a heat exchanger (108).

6. Process for the extraction of nitrogen according to any one of the preceding claims, wherein the rotating surfaces (103) are made of a plastic material, and/ or wherein the rotating surfaces (103) have a rotational speed between 0.1 to 10 rpm.

7. Process for the extraction of nitrogen according to any one of the preceding claims, wherein the air to contact surface ratio is comprised between 1.39 10⁻⁴ and 2.78 10⁻³ m³s/m².

8. Process for the extraction of nitrogen according to any one of the preceding claims, wherein the air current of step c. is fed via injection or extraction into the reactor (102) by means of a fan (109).

9. Process for the extraction of nitrogen according to any one of the preceding claims, wherein the acid reactive of step d. is kept in circulation by means of a recirculation pump (110) and, preferably, maintained at a pH between 1 and 5 by the dosing station (111) and where the mineralized product is optionally collected in the reservoir (112).

10. Skimming reactor for the extraction and recovery of nitrogen from zootechnical wastewater, configured to implement the process according to any one of the preceding claims.
